# EUROPÄISCHE PATENTSCHRIFT

(11) **EP 0 527 353 B1**
(45) Veröffentlichungstag und Bekanntmachung des Hinweises auf die Patenterteilung: **07.06.1995**
(21) Anmeldenummer: 92112203.2
(22) Anmeldetag: 17.07.1992
(51) Int. Cl.: C01B 33/025

(54) **Verfahren zur Erzeugung von Silicium im Elektroniederschachtofen und Rohstoff-Formlinge für die Durchführung des Verfahrens**
Process for the production of silicon in electric low-shaft furnace and green bricks to carry out the process
Procédé de production de silicium dans un bas fourneau électrique et briquettes brutes pour la mise en oeuvre de ce procédé

(30) Priorität: 08.08.1991 DE 4126254; 08.08.1991 DE 4126255
(43) Veröffentlichungstag der Anmeldung: 17.02.1993
(73) Patentinhaber: APPLIED INDUSTRIAL MATERIALS CORPORATION AIMCOR, Deerfield Illinois 60015 (US)
(72) Erfinder: Lask, Gert-Wilhelm, Dr., W-6636 Berus (DE)
(74) Vertreter: Andrejewski, Walter

(56) Entgegenhaltungen:
- EP-A- 0 272 777
- DE-A- 3 425 716
- FR-A- 2 069 638
- GB-A- 2 084 122

## Beschreibung

Die Erfindung betrifft ein Verfahren zur Erzeugung von Silicium durch Reduktion von Quarz im Elektroniederschachtofen, wobei der Elektroniederschachtofen mit einem Möller aus Rohstoff-Formlingen, die feinkörnigen Quarz sowie einen feinkörnigen Kohlenstoffträger aufweisen sowie aus stückigem Quarz beschickt und derart betrieben wird, daß die Reduktion hauptsächlich zweistufig erfolgt, und zwar in einer ersten Verfahrensstufe im oberen Bereich des Elektroniederschachtofens so, daß in den Rohstoff-Formlingen unter Bildung einer koksartigen Struktur mit offenen Poren eine Reduktion von feinteiligem Quarz zu Siliciumcarbid erfolgt sowie in einer zweiten Verfahrensstufe im unteren Bereich des Elektroniederschachtofens so, daß mit Siliciumcarbid eine Reduktion des stückig eingesetzten Quarzes zu Silicium erfolgt und außerdem gasförmiges Siliciumoxid gebildet wird, welches in dem Möller aufsteigt. Siliciumoxid bezeichnet im Rahmen der Erfindung Siliciummonoxid. Der stückig eingesetzte Quarz ist bei der Reduktion mit dem Siliciumcarbid flüssig.

Die Reaktion in der ersten Verfahrensstufe verläuft im Rahmen der bekannten Maßnahmen nach der summarischen Formel

SiO₂ + 3C - SiC + 2CO,

und zwar bei einer Temperatur von 1520 °C und mehr. Die Reaktion in der zweiten Stufe verläuft nach den Summenformeln

SiO₂ + 2SiC = 3Si + 2CO,

SiO₂ + C = SiO + CO,

und zwar bei einer Temperatur von 1800 bis 2000 °C (vgl. DE 20 55 564, DE 30 32 720). Die Rohstoff-Formlinge müssen in chemischer Hinsicht eine entsprechende Zusammensetzung aufweisen, im allgemeinen mit einem stöchiometrischen Überschuß an Kohlenstoff in bezug auf die Reaktionen, die sich in den Rohstoff-Formlingen abspielen. Die Rohstoff-Formlinge müssen außerdem in physikalischer Hinsicht den Beanspruchungen genügen, die sie auf ihrem Weg von der Herstellung bis zur Beschickung des Elektroniederschachtofens und auf ihrer Reise durch den Elektroniederschachtofen, bis zum Schmelzen des Quarzes, aufzunehmen haben. Zur Herstellung solcher Rohstoff-Formlinge, die in chemischer und physikalischer Hinsicht allen Anforderungen genügen, stehen verschiedene Verfahren zur Verfügung (vgl. DE 30 09 808, DE 34 25 716, DE 39 39 018). Insbesondere ist es bekannt, daß die porige, koksartige Struktur, die aus Kohlenstoff und Siliciumcarbid besteht, und sich in der ersten Verfahrensstufe einstellt, die Siliciumausbeute fördert, weil das in der zweiten Verfahrenstufe gasförmig freiwerdende Siliciumoxid von der koksartigen Struktur gleichsam schwammartig aufgenommen wird und zunächst kondensiert sowie auf der weiteren Reise der in der ersten Verfahrensstufe entstandenen Rohstoff-Formlinge mit ihrer porigen, koksartigen Struktur durch den Elektroniederschachtofen zu Silicium weiter reduziert wird. Nichtsdestoweniger ist die Silliciumausbeute des eingangs beschriebenen Verfahrens verbesserungsfähig. Es geht Siliciumoxid und dann Silicium verloren.

Der Erfindung liegt die Aufgabe zugrunde, bei dem eingangs beschriebenen Verfahren die Siliciumausbeute zu verbessern. Der Erfindung liegt fernerhin die Aufgabe zugrunde, Rohstoff-Formlinge anzugeben, die für das erfindungsgemäße Verfahren besonders geeignet sind.

Zur Lösung dieser Aufgabe lehrt die Erfindung, ausgehend von dem eingangs beschriebenen Verfahren, das Verfahren zur Erzeugung von Silicium durch Reduktion von Quarz im Elektroniederschachtofen, wobei der Elektroniederschachtofen mit einem Möller aus Rohstoff-Formlingen die feinkörnigen Quarz sowie einen feinkörnigen Kohlenstoffträger aufweisen, und aus stückigem Quarz beschickt sowie derart betrieben wird, daß die Reduktion hauptsächlich zweistufig erfolgt, und zwar in einer ersten Verfahrensstufe im oberen Bereich des Elektroniederschachtofens so, daß in den Rohstoff-Formlingen unter Bildung einer koksartigen Struktur mit offenen Poren eine Reduktion von feinteiligem Quarz zu Siliciumcarbid erfolgt sowie in einer zweiten Verfahrensstufe im unteren Bereich des Elektroniederschachtofens so, daß mit dem Siliciumcarbid eine Reduktion des stückig eingesetzten, geschmolzenen Quarzes zu Silicium erfolgt und außerdem gasförmiges Siliciumoxid gebildet wird, welches in dem Möller aufsteigt, dadurch gekennzeichnet, daß mit Rohstoff-Formlingen gearbeitet wird, die einen Zusatz eines Carbidbildners aufweisen, dessen Carbid Siliciumoxid zu Silicium reduziert, wobei Kohlenoxid frei wird, und daß die Menge des Zusatzes so gewählt wird, daß die Siliciumausbeute gegenüber dem Betrieb mit Rohstoff-Formlingen ohne den Zusatz um zumindest 5 Gew.-% erhöht wird. Nach bevorzugter Ausführungsform der Erfindung wird die Menge des Zusatzes so gewählt, daß die Siliciumausbeute gegenüber dem Betrieb ohne den Zusatz um zumindest 10 bis 20 Gew.-% erhöht wird. - Aus der Literaturstelle EP 0 272 777 A3 ist es bekannt bei einem Verfahren zur Herstellung von elementarem Silicium aus Siliciumdioxid Calcium-Verbindungen zur Förderung der Bildung von Siliciumcarbid einzusetzen.

Vorzugsweise wird so gearbeitet, wie es Gegenstand des Patentanspruches 3 ist. Die Carbidbildner werden, anders ausgedrückt, so bemessen, daß sie im Rohstoff-Formling, bezogen auf den Metallgehalt, 0,1 bis 1,0 Gew.-% ausmachen.

Die Erfindung nutzt die überraschende, bisher unbekannte Tatsache, daß bei dem eingangs beschriebenen Verfahren der erfindungsgemäße Zusatz die Siliciumausbeute beachtlich erhöht. Der Effekt stellt sich ein, wenn das eingangs beschriebene Verfahren im Rahmen der bekannten Technologie mit der üblichen Ofenführung durchgeführt wird. Eine bevorzugte Ausführungsform der Erfindung ist dadurch gekennzeichnet, daß mit Rohstoff-Formlingen gearbeitet wird, die den Carbidbildner in Form eines Silikates oder in Form von Silikaten aufweisen, und daß in den Rohstoff-Formlingen die Umsetzung des Silikates bzw. der Silikate mit Kohlenstoff zu dem Carbid unterhalb der Schmelztemperatur des Silikates bzw. der Silikate durchgeführt wird. Zu einer besonders ausgeprägten Erhöhung der Siliciumausbeute kommt man, wenn nach bevorzugter Ausführungsform der Erfindung der Elektroniederschachtofen so betrieben wird, daß im oberen Bereich das Carbid gebildet wird und an diesen entstehendes Siliciumoxid reduziert wird. Diese Verfahrensweisen verlangen eine Ofenführung, die sich leicht durch Versuche ermitteln läßt, und zwar in bezug auf Größe der Rohstoff-Formlinge, Größe des stückig eingesetzten Quarzes, Energiezuführung über die Elektroden und Durchsatzgeschwindigkeit. Insoweit beruht die Erfindung auf der Erkenntnis, daß in den Rohstoff-Formlingen im Elektroniederschachtofen besondere Phänomene ablaufen, die bisher unbeobachtet geblieben und nicht ausgenutzt worden sind.

Nach einer bevorzugten Ausführungsform der Erfindung wird bei dem eingangs beschriebenen Verfahren mit Rohstoff-Formlingen gearbeitet, die einen Zusatz von Magnesiumsilikat aufweisen, wobei die Menge des Zusatzes an Magnesiumsilikat so gewählt wird, daß die Siliciumausbeute gegenüber dem Betrieb mit magnesiumfreien Rohstoff-Formlingen um zumindest 5% erhöht wird. Nach bevorzugter Ausführungsform der Erfindung wird die Menge des Zusatzes an Magnesiumsilikat so gewählt, daß die Siliciumausbeute gegenüber dem Betrieb mit magnesiumfreien Rohstoff-Formlingen um 10 bis 20 Gew.-% erhöht wird. Es empfiehlt sich, den Elektroniederschachtofen so zu betreiben, daß im oberen Bereich das Magnesiumsilikat in den Rohstoff-Formlingen möglichst vollständig zu Magnesiumcarbid umgesetzt wird und an diesem in den Formlingen entstandenes und im Freiraum des Möllers aufsteigendes Siliciumoxid reduziert wird. Dabei kann mit Rohstoff-Formlingen gearbeitet werden, die neben Magnesiumsilikat andere, im Elektroniederschachtofen carbidbildende Silikate aufweisen, die auch einen geringen Gehalt an entsprechenden Oxiden aufweisen können. Gegenstand der Erfindung ist, anders ausgedrückt, die Verwendung von Magnesiumsilikat für den angegebenen Zweck und in der angegebenen Abstimmung. - Zum Verständnis der beschriebenen Effekte tragen die folgenden, summarisch zu betrachtenden Reaktionen bei, denen die Thermodynamik der Zusammenhänge im Elektroniederschachtofen nicht entgegensteht. Dabei wird an die bevorzugte Ausführungsform der Erfindung angeschlossen, bei der mit Magnesiumsilikat gearbeitet wird.

Zuerst wird aus dem Magnesiumsilikat das entsprechende Magnesiumcarbid erzeugt, und zwar im wesentlichen nach der Summenformel

MgSiO₃ + 4C = MgC₂ + SiO + 2CO.

Das gasförmige Siliciumoxid ist ohne weiteres in der Lage, das Magnesiumcarbid anzugreifen, und zwar gleich dort, wo es sich gebildet hat:

MgC₂ + 2SiO = Mg + 2Si + 2CO.

Das flüssige Silicium wird sehr schnell in sein Carbid überführt:

2Si + 2C = 2SiC.

Das zwischenzeitlich auftretende Magnesium ist gasförmig und kann sich zwanglos mit Kohlenstoff erneut zu Magnesiumcarbid umsetzen:

Mg + 2C = MgC₂.

Im Ergebnis ist festzustellen, daß das Magnesiumsilikat über das in den Rohstoff-Formlingen gebildete Magnesiumcarbid als Siliciumoxid-Fänger funktioniert. Damit wird der sonst verlustreiche Vorgang der Siliciumoxid-Bildung unterdrückt und die Bildung von Siliciumcarbid erleichtert. Es ist davon auszugehen und durch die Ofenführung erreichbar, daß die wesentlichen Reaktanten, Siliciumoxid, Silicium und Magnesium, zum richtigen Zeitpunkt in nichtfester Form vorliegen. Während Quarzsand und fester Kohlenstoff lediglich über eine fest/fest-Diffusion bis rund 1700 °C miteinander reagieren können und bei der Reaktion sich selbst auf einen reaktionshemmenden Abstand bringen, weil die Kontaktzonen, in denen die Reaktion stattfinden kann, immer schlechter werden, steigt die Siliciumoxid-Bildung an, weil eine Verarmung an Kohlenstoff in Nähe des Sandkornes eintritt. In diese Zusammenhänge greift das Magnesiumcarbid vorteilhaft ein. Der zunehmende Anfall an Siliciumoxid wird in der sich bildenden koksartigen Struktur nicht nur aufgefangen, sondern auch umgesetzt, wobei sich das Magnesiumcarbid aus Magnesiumdampf und Kohlenstoffüberschuß neu bildet. Darauf beruht das Ansteigen der Siliciumausbeute. Das Magnesiumcarbid steht bis zum Ende des Reduktionsprozesses zur Verfügung, solange die eingesetzten Rohstoff-Formlinge ihre Form behalten. In die sich aufgeweiteten Poren dringt mehr und mehr Siliciumoxid von außen auch bei Temperaturen über 1700 °C ein, wobei es in der koksartigen Struktur mit offenen Poren reduziert wird. Der fortschreitende Kohlenstoffverbrauch in den Rohstoff-Formlingen führt später zu einem Zerfall der Rohstoff-Formlinge, - und das gebildete Siliciumcarbid setzt sich mit dem geschmolzenen Quarz, wie eingangs beschrieben, um. Danach gelangt das Magnesium in das freie Volumen der Chargierung, wo es ein letztes Mal die Chance hat, Siliciumoxid zu reduzieren. Als Magnesiumoxid im Abgas strömt es in die Gasreinigung, wo es mit anderem Staub niedergeschlagen wird.

Gegenstand der Erfindung sind auch Rohstoff-Formlinge für die Durchführung des Verfahrens. Sie sind Gegenstand der Patentansprüche 6 und 12. Die Rohstoff-Formlinge können nach bekannten Verfahren hergestellt werden, wie sie einleitend angesprochen worden sind. Insbesondere kann in den Rohstoff-Formlingen der nichtbackende Kohlenstoffträger aus Petrolkoks bestehen. Es empfiehlt sich, als bituminöses Bindemittel eine Pech/Kohle-Legierung einzusetzen. Auch in bezug auf die Mischungsverhältnisse der Rohstoffe und des Bindemittels in den Rohstoff-Formlingen für die Durchführung des erfindungsgemäßen Verfahrens kann an den bewährten Stand der Technik angeschlossen werden. So kann die Rohstoff-Mischung bis zu 65 Gew.% Quarzsand, vorzugsweise 15 bis 40 Gew.-% Quarzsand, und 0,5 bis 5,0 Gew.-% Magnesiumsilikat aufweisen. Das bituminöse Bindemittel weist, bezogen auf die Ausgangsmischung, aus der die Rohstoff-Formlinge geformt werden, vorzugsweise 7 Gew.-% Pech in Form von kohlestämmigem und/oder erdölstämmigem Pech und zumindest 12 Gew.-% backender Kohle auf. Es empfiehlt sich, die Rohstoff-Formlinge, die für das erfindungsgemäße Verfahren eingesetzt werden, durch eine Wärmebehandlung zu härten. Die Wärmebehandlung wird vorzugsweise im Sandbett eines Drehrohrofens bei einer Sandtemperatur von etwa 500 °C durchgeführt (vgl. DE 37 24 541).

Überraschenderweise wird die Grünfestigkeit der Rohstoff-Formlinge, die dem Möller zugesetzt werden, aber auch die Festigkeit der Rohstoff-Formlinge auf ihrer Reise durch den Niederschachtofen trotz des Zusatzes von Magnesiumsilikat nicht beeinträchtigt, obgleich es aus der Kokereitechnik bekannt ist, daß aus anderen Gründen beigegebene Alkali-Verbindungen oder Erdalkali-Verbindungen die Festigkeit störend beeinträchtigen können.

Bei der bevorzugten Ausführungsform der Erfindung kann mit Magnesiumsilikaten unterschiedlicher Provenienz gearbeitet werden. Neben technisch reinem Magnesiumsilikat bieten sich z. B. Talkum und Olivin an. Olivin ist ein Mineral der chemischen Zusammensetzung (Mg, Fe)₂ SiO₄, welches in ortho-rhombischen prismatischen bis dicktafligen glasig glänzenden Kristallen auftritt. Talkum bezeichnet ein Mineral der chemischen Zusammensetzung Mg₃ (OH)₂ (Si₄O₁₀). Sowohl bei der Verwendung von Olivin als auch bei der Verwendung von Talkum stören die begleitenden Verbindungen nicht. Man kann aber auch mit praktisch reinem Magnesiumsilikat arbeiten. Mit der Lehre der Erfindung, daß die Menge des Zusatzes so gewählt wird, daß die Siliciumausbeute gegenüber dem Betrieb mit magnesiumfreien Rohstoff-Formlingen um zumindest 5 Gew.-% bzw. 10 bis 20 Gew.-% erhöht wird, lassen sich die erforderlichen Mengen, unabhängig von der Provenienz des Zusatzes, durch Experimente, auch durch Experimente im Labor, leicht abstimmen. Man kann in diesem Zusammenhang davon ausgehen, daß der Gehalt an Mg zwischen 0,1 bis 1,0% liegt. Diese Größenordnung wird von den Verunreinigungen gesteuert, die schon im Rohmaterial vorliegen und auch carbidische Reaktionen eingehen können. Diese Verunreinigungen haben aber den großen Nachteil, daß sie späterhin ins Si-Metall legiert werden. Dieses findet bei Einsatz sauberer Rohstoffe und Mg-Silikaten nicht statt, da Mg-Metall bei rund 1100 °C siedet und am Ende des Prozesses den Ofen verläßt. Es wird also ein höchst sauberes Si-Metall bei Verwendung von Mg-Silikaten, Petrolkoks, Pech, aschearmer Kohle und Quarzsand erzeugt.

## Patentansprüche

1. Verfahren zur Erzeugung von Silicium durch Reduktion von Quarz im Elektroniederschachtofen, wobei der Elektroniederschachtofen mit einem Möller
aus Rohstoff-Formlingen, die feinkörnigen Quarz sowie einen feinkörnigen Kohlenstoffträger aufweisen, und aus stückigem Quarz
beschickt sowie derart betrieben wird, daß die Reduktion hauptsächlich zweistufig erfolgt, und zwar in einer ersten Verfahrensstufe im oberen Bereich des Elektroniederschachtofens so, daß in den Rohstoff-Formlingen unter Bildung einer koksartigen Struktur mit offenen Poren eine Reduktion von feinteiligem Quarz zu Siliciumcarbid erfolgt sowie in einer zweiten Verfahrensstufe im unteren Bereich des Elektroniederschachtofens so, daß mit dem Siliciumcarbid eine Reduktion des stückig eingesetzten, geschmolzenen Quarzes zu Silicium erfolgt und außerdem gasförmiges Siliciumoxid gebildet wird, welches in dem Möller aufsteigt, **dadurch gekennzeichnet**, daß mit Rohstoff-Formlingen gearbeitet wird,
die einen Zusatz eines Carbidbildners aufweisen, dessen Carbid Siliciumoxid zu Silicium reduziert, wobei Kohlenoxid frei wird,
und daß die Menge des Zusatzes so gewählt wird, daß die Siliciumausbeute gegenüber dem Betrieb mit Rohstoff-Formlingen ohne den Zusatz um zumindest 5 Gew.-% erhöht wird.

2. Verfahren nach Anspruch 1, dadurch gekennzeichnet, daß die Menge des Zusatzes so gewählt wird, daß die Siliciumausbeute gegenüber dem Betrieb mit Rohstoff-Formlingen ohne den Zusatz um zumindest 10 bis 20 Gew.-% erhöht wird.

3. Verfahren nach einem der Ansprüche 1 oder 2, dadurch gekennzeichnet, daß mit Rohstoff-Formlingen gearbeitet wird, die einen Zusatz eines Carbidbildners mit einem Metall aus der Gruppe
"Calcium, Aluminium"
oder Mischungen davon aufweisen.

4. Verfahren nach einem der Ansprüche 1 bis 3, dadurch gekennzeichnet, daß mit Rohstoff-Formlingen gearbeitet wird, die den Carbidbildner in Form eines Silikates oder in Form von Silikaten aufweisen, und daß in den Rohstoff-Formlingen die Umsetzung des Silikates bzw. der Silikate mit Kohlenstoff zu dem Carbid unterhalb der Schmelztemperatur des Silikates bzw. der Silikate durchgeführt wird.

5. Verfahren nach einem der Ansprüche 1 bis 4, dadurch gekennzeichnet, daß der Elektroniederschachtofen so betrieben wird, daß im oberen Bereich das Carbid gebildet und an diesem aufsteigendes Siliciumoxid reduziert wird.

6. Rohstoff-Formlinge für die Durchführung des Verfahrens nach einem der Ansprüche 1 bis 5, bestehend aus einer innigen Rohstoffmischung aus
feinkörnigem Quarzsand,
einem feinkörnigen nichtbackenden Kohlenstoffträger und einem feinteiligen Carbidbildner oder feinteiligen Carbidbildnern,
welche Rohstoffmischung zu einem bituminösen Bindemittel zu den Rohstoff-Formlingen brikettiert sind, wobei der Kohlenstoffgehalt insgesamt größer ist, als es für den Ablauf der Reaktionen, die in den Rohstoff-Formlingen stattfinden, stöchiometrisch erforderlich ist.

7. Verfahren nach Anspruch 1, **dadurch gekennzeichnet,** daß mit Rohstoff-Formlingen gearbeitet wird, die einen Zusatz von Magnesiumsilikat aufweisen, und daß die Menge des Zusatzes an Magnesiumsilikat so gewählt wird, daß die Siliciumausbeute gegenüber dem Betrieb mit magnesiumfreien Rohstoff-Formlingen um zumindest 5 Gew.-% erhöht wird.

8. Verfahren nach Anspruch 7, dadurch gekennzeichnet, daß die Menge des Zusatzes an Magnesiumsilikat so gewählt wird, daß die Siliciumausbeute gegenüber dem Betrieb mit magnesiumfreien Rohstoff-Formlingen um 10 bis 20 Gew.-% erhöht wird.

9. Verfahren nach einem der Ansprüche 7 oder 8, dadurch gekennzeichnet, daß der Elektroniederschachtofen so betrieben wird, daß im oberen Bereich das Magnesiumsilikat in den Rohstoff-Formlingen möglichst vollständig zu Magnesiumcarbid umgesetzt wird und an diesem in den Formlingen entstandenes und im Freiraum des Möllers aufsteigendes Siliciumoxid reduziert wird.

10. Verfahren nach einem der Ansprüche 7 bis 9, dadurch gekennzeichnet, daß die Umsetzung des Magnesiumsilikates in den Rohstoff-Formlingen zu Magnesiumcarbid unterhalb der Schmelztemperatur durchgeführt wird.

11. Verfahren nach einem der Ansprüche 7 bis 10, dadurch gekennzeichnet, daß mit Rohstoff-Formlingen gearbeitet wird, die neben Magnesiumsilikat andere, im Elektroniederschachtofen carbidbildende Silikate aufweisen.

12. Rohstoff-Formlinge für die Durchführung des Verfahrens nach einem der Ansprüche 7 bis 11, bestehend aus einer innigen Rohstoffmischung aus
feinkörnigem Quarzsand,
einem feinkörnigen, nichtbackenden Kohlenstoffträger und feinteiligem Magnesiumsilikat,
die mit einem bituminösen Bindemittel zu den Rohstoff-Formlingen brikettiert sind, wobei der Kohlenstoffgehalt insgesamt größer ist, als es für den Ablauf der Reaktionen, die in den Rohstoff-Formlingen stattfinden, stöchiometrisch erforderlich ist.

13. Rohstoff-Formlinge nach einem der Ansprüche 6 oder 12, wobei der nichtbackende Kohlenstoffträger aus Petrolkoks besteht.

14. Rohstoff-Formlinge nach einem der Ansprüche 6 oder 13, wobei als bituminöses Bindemittel eine Pech/Kohle-Legierung eingesetzt ist.

15. Rohstoff-Formlinge nach einem der Ansprüche 12 bis 14, wobei die Rohstoff-Mischung bis zu 65 Gew.-% Quarzsand, vorzugsweise 15 bis 40 Gew.-% Quarzsand, und 0,5 bis 5,0 Gew.-% Magnesiumsilikat aufweisen.

16. Rohstoff-Formlinge nach einem der Ansprüche 12 bis 15, wobei das bituminöse Bindemittel, bezogen auf die Ausgangsmischung, aus der die Rohstoff-Formlinge geformt wurden, zumindest 7 Gew.-% Pech in Form von kohlestämmigem und/oder erdölstämmigem Pech und zumindest 12 Gew.-% backende Kohle aufweist.

17. Rohstoff-Formlinge nach einem der Ansprüche 12 bis 16, die durch eine Wärmebehandlung gehärtet worden sind.

18. Rohstoff-Formlinge nach einem der Ansprüche 12 bis 17, die im Sandbett eines Drehrohrofens bei einer Sandtemperatur von etwa 500 °C gehärtet worden sind.

## Claims

1. A process for the production of silicon by the reduction of quartz in electric low-shaft furnaces, wherein the electric low-shaft furnace is charged with a burden
of raw material mouldings containing fine-grain quartz and a fine-grain carbon carrier, and quartz in lumps
and is so operated that the reduction takes place in substantially two stages, namely in a first stage in the top zone of the electric low-shaft furnace in such manner that rediction of fine-grain quartz to silicon carbide takes place in the raw material mouldings, with the formation of a coke-like structure having open pores, and in a second stage in the bottom zone of the electric low-shaft furnace in such manner that with the silicon carbide there is a reduction to silicon of the melted quartz used in lump form and gaseous silicon oxide is also formed and rises in the burden, characterized in that the raw material mouldings used
have an addition of a carbide former, the carbide of which reduces silicon oxide to silicon, carbon oxide being liberated,
and in that the quantity of the addition is so selected that the silicon yield is increased by at least 5% by weight compared with operation using raw material mouldings without the addition.

2. A process according to claim 1, characterised in that the quantity of the addition is so selected that the silicon yield is increased by at least 10 to 20% by weight compared with operation with raw material mouldings without the addition.

3. A process according to claim 1 or 2, characterised in that the raw material mouldings used contain an addition of a carbide former with a metal from the group comprising:
"calcium, aluminium"
or mixtures thereof.

4. A process according to any one of claims 1 to 3, characterised in that the raw material mouldings used contain the carbide former in the form of a silicate or in the form of silicates, and in that the reaction of the silicate or silicates with carbon to form the carbide is effected in the raw material mouldings below the melting temperature of the silicate or silicates.

5. A process according to any one of claims 1 to 4, characterised in that the electric low-shaft furnace is so operated that the carbide is formed in the top zone and rising silicon oxide is reduced thereon.

6. Raw material mouldings for performing the process according to and one of claims 1 to 5, consisting of an intimate raw material mixture of:
fine-grain quartz sand,
a fine-grain non-caking carbon carrier and a fine-particle carbide former or fine-particle carbide formers,
which raw material mixture is briquetted with a bituminous binder to form the raw material mouldings, the total carbon content being greater than stoichiometrically necessary for the progress of the reactions taking place in the raw material mouldings.

7. A process according to claim 1, characterised in that the raw material mouldings used contain an addition of magnesium silicate and in that the quantity of the addition of magnesium silicate is so selected that the silicon yield is increased by at least 5% by weight compared with operation with raw material mouldings without magnesium.

8. A process according to claim 7, characterised in that the quantity of the magnesium silicate addition is so selected that the silicon yield is increased by 10 to 20% by weight compared with operation with raw material mouldings without magnesium.

9. A process according to claim 7 or 8, characterised in that the electric low-shaft furnace is so operated that the magnesium silicate in the raw material mouldings is completely converted to magnesium carbide as far as possible in the top zone and silicon oxide forming in the mouldings and rising in the burden free space is reduced on said magnesium carbide.

10. A process according to any one of claims 7 to 9, characterised in that the conversion of the magnesium silicate in the raw material mouldings to magnesium carbide is effected below the melting temperature.

11. A process according to any one of claims 7 to 10, characterised in that the raw material mouldings used contain in addition to magnesium silicate other silicates which form carbide in the electric low-shaft furnace.

12. Raw material mouldings for performing the process according to any one of claims 7 to 11, consisting of an intimate raw material mixture of:
fine-grain quartz and,
a fine-grain non-caking carbon carrier and fine-particle magnesium silicate,
briquetted with a bituminous binder to form the raw material mouldings, the total carbon content being greater than stoichiometrically required for the progress of the reactions taking place in the raw material mouldings.

13. Raw material mouldings according to claim 6 or 12, wherein the non-caking carbon carrier consists of petroleum coke.

14. Raw material mouldings according to claim 6 or 13, wherein a pitch/coal alloy is used as bituminous binder.

15. Raw material mouldings according to any one of claims 12 to 14, wherein the raw material mixture consists of up to 65% by weight of quartz sand, preferably 15 to 40% by weight of quartz sand, and 0.5 to 5.0% by weight of magnesium silicate.

16. Raw material mouldings according to any one of claims 12 to 15, wherein the bituminous binder, based on the initial mixture from which the raw material mouldings were made, contains at least 7% by weight of pitch in the form of pitch originating from coal and/or pitch originating from petroleum and at least 12% by weight of caking coal.

17. Raw material mouldings according to any one claims 12 to 16, which have been hardened by heat treatment.

18. Raw material mouldings according to any one of claims 12 to 17, which have been hardened in the sand bed of a rotary tubular kiln at a sand temperature of about 500°C.

## Revendications

1. Procédé de production de silicium par réduction de quartz dans un bas fourneau électrique, ce dernier étant chargé d'un lit de fusion en briquettes brutes comportant du quartz à grains fins ainsi qu'un support de carbone à grains fins et du quartz en morceaux, et utilisé de telle manière que le réduction ait lieu principalement en doux étapes, à savoir une première étape de procédé dons la zone supérieure du bas fourneau électrique de telle manière qu'ait lieu dans les briquettes brutes une réduction du quartz à fines particules, en carbure de silicium, avec la formation d'une structure de type coke avec des pores ouverts, de méme qu'une deuxième étape de procédé dans la zone inférieure du bas fourneau électrique, de telle manière qu'une réduction du quartz fondu utilisé ait lieu avec le carbure de silicium et qu'en outre le l'oxyde de silicium gazeux soit formé, lequel s'élève dans le lit de fusion,
caractérisé en ce que l'on utilise des briquettes brutes qui comportent un additif d'un agent de formation de carbure, de l'oxyde de carbone étant libéré,
et en ce que le quantité de l'additif est choisie de telle manière que le rendement en silicium est augmenté d'au moins 5% en poids par rapport à la mise en oeuvre sans l'additif.

2. Procédé selon la revendication 1, caractérisé en ce que la quantité d'additif est choisie de telle manière que le rendement en silicium est augmenté d'au moins 10 à 20% en poids par rapport à la mise en oeuvre sans l'additif.

3. Procédé selon l'une des revendications 1 ou 2, caractérisé en ce que l'on utilise des briquettes brutes qui comportent un additif d'un agent de formation de carbure avec un métal du groupe 〈〈 Calcium, Aluminium 〉〉 ou des mélanges de ceux-ci.

4. Procédé selon l'une des revendications 1 à 3, caractérisé en ce que l'on utilise des briquettes brutes comportant un agent de formation de carbure sous la forme d'un silicate ou sous la forme de silicates, et en ce que la transformation respectivement du ou des silicates avec le carbone en carbure dans les briquettes brutes est effectuée en-dessous de le température de fusion du ou des silicates respectivement.

5. Procédé selon l'une des revendications 1 à 4, caractérisé en ce que le bas fourneau électrique est utilisé de manière à former le carbure dans la zone supérieure, et à réduire l'oxyde de silicium qui s'en dégage.

6. Briquettes brutes pour la mise en oeuvre du procédé selon l'une des revendications 1 à 5, composées d'un mélange intime de matières brutes en
sable de quartz à grains fins,
un support de carbone non agglutiné à grain fins et un agent de formation de carbure en fines particules ou des agents de formation de carbure en fines particules,
ledit mélange de matières brutes étant briqueté avec un matériau liant bitumineux sous la forme de briquettes brutes, le contenu en carbone étant globalement plus élevé que ce qui est nécessaire d'un point de vue stoechiométrique Pour le déroulement des réactions qui ont lieu dans les briquettes brutes.

7. Procédé selon la revendication 1, caractérisé en ce que l'on utilise des briquettes brutes présentant un additif de silicate de magnésium, et que la quantité d'additif de silicate de magnésium est choisie de telle sorte que le rendement en silicium est augmenté d'au moins 5% en poids par rapport à la mise en oeuvre avec des briquettes brutes sans magnésium.

8. Procédé selon la revendication 7, caractérisé en ce que la quantité d'additif de silicate de magnésium est choisie de telle manière que le rendement en silicium est augmenté de 10 à 20 % en poids par rapport à la mise en oeuvre avec des briquettes brutes sans magnésium.

9. Procédé selon l'une des revendications 7 ou 8, caractérisé en ce que le bas fourneau électrique est utilisé de telle manière que dans la zone supérieure le silicate de magnésium des briquettes brutes peut être complètement transformé en carbure de magnésium et que l'oxyde de silicium formé dans les briquettes et s'élevant à partir du carbure de magnésium dans l'espace libre du lit de fusion est réduit.

10. Procédé selon l'une des revendications 7 à 9, caractérisé en ce que la transformation du silicate de magnésium dans les briquettes brutes en carbure de magnésium est effectuée en-dessous de la température de fusion.

11. Procédé selon l'une des revendications 7 à 10, caractérisé en ce que l'on utilise des briquettes brutes qui comportent en plus du silicate de magnésium, d'autres silicates susceptibles de former des carbures dans le bas fourneau électrique.

12. Briquettes brutes pour la mise en oeuvre ? du procédé selon l'une des revendications 7 à 11, composées d'un mélange intime de matières brutes en
sable de quartz à grains fins,
un support de carbone non agglutiné à grain fins et un agent de formation de carbure en fines particules et du silicate de magnésium en fines particules,
qui sont briquetés avec un matériau liant bitumineux sous la forme de briquettes brutes, le contenu en carbone étant globalement plus élevé que ce qui est nécessaire d'un point de vue stoechiométrique pour le déroulement des réactions qui ont lieu dans les briquettes brutes.

13. Briquettes brutes selon l'une des revendications 6 ou 12, dans lesquelles le support de carbone non agglutiné est en coke de pétrole.

14. Briquettes brutes selon l'une des revendications 6 ou 13, dans lesquelles un alliage de charbon et de poix est utilisé pour le matériau liant bitumineux.

15. Briquettes brutes selon l'une des revendications 12 à 14, dans lesquelles le mélange de matières brutes comporte jusqu'à 65% en poids de sable de quartz, de préférence 15 à 40% en poids de sable de quartz, et de 0,5 à 5,0% en poids de silicate de magnésium.

16. Briquettes brutes selon l'une des revendications 12 à 15, le matériau liant bitumineux, rapporté au mélange final à partir duquel les briquettes brutes ont été formées, comporte au moins 7% en poids de poix sous la forme de poix provenant du charbon ou de pétrole brut, et au moins 12% en poids de charbon agglutiné.

17. Briquettes brutes selon l'une des revendications 12 à 16, qui ont été durcies par un traitement par le chaleur.

18. Briquettes brutes selon l'une des revendications 12 à 17, qui ont été durcies dans le lit de sable d'un fourneau tubulaire tournant à une température de sable de l'ordre de 500°C.
